# EUROPÄISCHE PATENTSCHRIFT

(11) **EP 0 363 867 B1**
(45) Veröffentlichungstag und Bekanntmachung des Hinweises auf die Patenterteilung: **31.08.1994**
(21) Anmeldenummer: 89118699.1
(22) Anmeldetag: 08.10.1989
(51) Int. Cl.: H04M 1/65

(54) **Aufnahme-Wiedergabegerät, insbesondere Telefonanrufbeantworter**
Recording and play-back device, particularly a telephone answering machine
Appareil d'enregistrement et de reproduction, en particulier répondeur téléphonique

(30) Priorität: 08.10.1988 DE 3834303
(43) Veröffentlichungstag der Anmeldung: 18.04.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Zwenig, Günther GRUNDIG E.M.V., Kurgartenstrasse 37 D-8510 Fürth/Bay (DE); Zell, Horst, Dipl. Ing. GRUNDIG E.M.V. E.M.V., Kurgartenstrasse 37 D-8510 Fürth/Bay (DE)
(74) Vertreter: Dreykorn-Lindner, Werner, Dipl.-Ing.

(56) Entgegenhaltungen:
- DE-A- 1 772 078
- DE-A- 3 042 842
- GB-A- 2 152 788
- GB-A- 2 158 280
- GB-A- 2 164 783
- GB-A- 2 174 865
- US-A- 4 404 604
- US-A- 4 764 823
- PATENT ABSTRACTS OF JAPAN, vol. 9, no. 6 (P-326)(1729) 11.Januar 1985 & JP-A-59 154 661 ( HITACHI SEISAKUSHO K.K. ) 3. September 1984
- PATENT ABSTRACTS OF JAPAN, vol. 8, no. 202 (P-300)(1639) 14. September 1984 & JP-A-59 084 361 ( MATSUSHITA DENKI SANGYO K.K. ) 16. Mai 1984

## Beschreibung

Die Erfindung betrifft ein Aufnahme-Wiedergabegerät nach dem Oberbegriff des Patentanspruchs 1.

Aufnahme-Wiedergabegeräte enthalten meist eine Steuereinrichtung und eine Bedieneinrichtung, die zur Steuerung von Betriebsfunktionen, z.B. Aufnahme- und Wiedergabevorgängen, durch den Benutzer betätigt wird. Solche Aufnahme-Wiedergabegeräte sind beispielsweise Diktiergeräte, Tonbandgeräte, Telefonanrufbeantworter, Videorecorder, Camcorder usw. Bei allen diesen verschiedenen Aufnahme-Wiedergabegeräten ist sowohl die Forderung nach hoher Funktionssicherheit als auch die Forderung nach möglichst einfacher Bedienung durch den Benutzer zu erfüllen.

Im Hinblick auf eine einfache Bedienung ist häufig zur Steuerung der verschiedenen Gerätefunktionen lediglich ein Bedienelement vorgesehen, meist ein Schiebeschalter mit verschiedenen Schaltstellungen, welcher vom Benutzer zu betätigen ist. Aus der Zeitschrift "Grundig Technische Informationen 1/1968, Seiten 313-318" ist ein Diktiergerät mit einem einzigen Bedienungsknopf bekannt.

Die Betriebsfunktionen bzw. Betriebsstellungen: Aufnahme, Aus/Halt, Wiedergabe und Rücklauf werden vom Benutzer durch das Verschieben des Bedienungsknopfs in die verschiedenen Betriebsstellungen gesteuert. Um zu verhindern, daß eine Aufnahme versehentlich gelöscht wird oder daß das Gerät in der Betriebsstellung "Aufnahme" oder "Wiedergabe" läuft, bis das Tonband seine Endstellung erreicht hat (z.B. beim Einstecken des Geräts in eine Tasche und hängenbleiben des aus dem Gerätegehäuse herausragenden Bedienungsknopfes) ist die Betriebsstellung "Aus/Halt" arretiert (Einrasten des Bedienungsknopfes in der Betriebsstellung "Aus/Halt" in eine am Gerät dafür vorgesehene Aussparung). Trotzdem kann der Fall eintreten, daß durch Überwinden der Federkraft der Druckfeder die Arretierung ausgelöst wird.

Zur Erhöhung der Funktionssicherheit, vor allem um das versehentliche Verstellen des Schiebers in die Betriebsstellung "Aufnahme" zu vermeiden, ist aus der DE-B 23 02 954 eine Kombination aus Schieber, Drücker und Sperrstift bekannt. Soll der Schieber in die Betriebsstellung "Aufnahme" gebracht werden, so muß der Benutzer sowohl den Drücker als auch den im Drücker angeordneten Sperrstift betätigen. Eine solche mechanische Verriegelungsschaltung erfordert einen hohen Schaltungsaufwand und ist zudem vom Benutzer nicht einfach zu bedienen.

Zur Erfüllung der Funktionssicherheit kann im Aufnahme-Wiedergabegerät auch eine elektrische Verriegelungsschaltung vorgesehen werden. Für einen Videorecorder ist beispielsweise eine solche Verriegelungsschaltung aus der Zeitschrift "Grundig Technische Informationen 3/1978, Seiten 172, 173 und 190" bekannt. Die Verriegelungsschaltung speichert die Befehle die von der Tastatur kommen, wodurch sichergestellt ist, daß immer nur ein Befehl angenommen wird. Zur Vermeidung unerwünschter Funktionsabläufe sind diese gegeneinander verriegelt. Mittels einer Anzeigeeinrichtung (z.B. Leuchtdioden) wird angezeigt, ob der Befehl angenommen wurde oder ob der Übergang in die neue Funktion gesperrt ist.

Die Verriegelung und Entriegelung der Tastatur kann auch durch die Steuereinrichtung (Baustein) automatisch gesteuert werden, wie dies in der oben genannten Zeitschrift auf Seite 173, mittlere Spalte, Abschnitt "Automatischer Ablauf am Bandende" näher erläutert wird. Wird die vor beiden Enden des Bandes angebrachte Marke (Schaltfolie) passiert, so sperrt die Steuereinrichtung die Tastatur und die Lauffunktion wird unterbrochen. Wenn das Band zum Stillstand gekommen ist, wird es in die Gegenrichtung zurückbewegt, wodurch die Bandendemarke wieder vor den Fühler kommt. Dann wird die Tastatur wieder freigegeben.

Die aus der oben genannten Zeitschrift bekannte Kombination von Verriegelungsschaltung und Steuereinrichtung weist bereits ein relativ hohes Maß an Funktionssicherheit auf, trotzdem kann durch unbeabsichtigtes Betätigen einer Taste, z.B. der Stoptaste, ein automatischer Funktionsablauf, z.B. Aufnahme mittels Schaltuhr, gestört oder ein unerwünschter Funktionsablauf eingeleitet werden. Ein Hinweis darauf, daß der Benutzer durch Befehlseingabe die Tastatur in den Verriegelungszustand steuern und wieder entriegeln kann, ist dem oben genannten Zeitschriftenaufsatz nicht zu entnehmen.

Weiterhin ist aus der DE-B 29 34 064 eine Verriegelungsschaltung bekannt, bei der mittels eines Zeitgliedes mit Speicherfunktion und digitalen Verknüpfungsschaltungen die zeitliche Reihenfolge und das Eingeben bestimmter Steuerbefehle während einer durch das Zeitglied vorgegebenen Wartezeit überwacht wird. Die Möglichkeit einer durch den Benutzer gesteuerten Entriegelung ist der daraus bekannten Verriegelungsschaltung nicht zu entnehmen.

Weiterhin ist aus der EP-A2-0 153 602 eine Befehlseingabe bei einem mikroprozessorgesteuerten Videorecorder bekannt, bei der durch Eingabe einer Codezahl und eines Zeitpunktes Sonderfunktionen ausgelöst werden. Dadurch ist es möglich, beispielsweise eine unbefugte Benutzung des Geräts zu verhindern oder bestimmte Sonderfunktionen bzw. Betriebsfunktionen, z.B. die Aufnahmefunktion, zu verriegeln. Die Entriegelung, d.h. das Beenden der Sonderfunktionen, erfolgt entweder durch erneutes Eingeben der Codezahl oder durch Zeitablauf. Eine solche Befehlseingabe erfordert auf dem Bedienfeld neben den Bedienelementen zur Steuerung des normalen Betriebsablaufs des Videorecorders eine besondere Zehnertastatur sowie entsprechende Programme des Mikroprozessors zur Steuerung sowohl der Betriebsfunktionen, beispielsweise Start, Stop, schneller Vorlauf, schneller Rücklauf, Pause, Suchlauf, Aufnahme, Wiedergabe usw. als auch der Sonderfunktionen, z.B. Entriegelung, Servicezustand usw.

Der Erfindung liegt die Aufgabe zugrunde, ein Aufnahme-Wiedergabegerät so auszugestalten, daß der Benutzer durch die Bedienelemente sowohl Betriebsfunktionen als auch Sonderfunktionen des Aufnahme-Wiedergabegeräts auslösen als auch beenden kann.

Diese Aufgabe wird bei einem gattungsgemäßen Aufnahme-Wiedergabegerät durch die kennzeichnenden Merkmale des Patentanspruchs 1 gelöst.

Das erfindungsgemäße Aufnahme-Wiedergabegerät weist den Vorteil auf, daß mit ein und derselben Bedieneinrichtung sowohl die Betriebsfunktionen als auch Sonderfunktionen ausgelöst und beendet werden können. Auch während des vollautomatischen Betriebs des Geräts ist eine hohe Funktionssicherheit gewährleistet, insbesondere wird zuverlässig das unbeabsichtigte Löschen einer Aufnahme verhindert. Das Beenden von Sonderfunktionen durch den Benutzer wird auf überraschend einfache Art und Weise ermöglicht, so daß das erfindungsgemäße Aufnahme-Wiedergabegerät auch einen hohen Bedienkomfort aufweist.

Ist gemäß der Ausführungsform nach Patentanspruch 2 im Aufnahme-Wiedergabegerät ein Mikroprozessor angeordnet und übernimmt dieser die Steuerung der Sonderfunktionen, so ist der zusätzliche Schaltungsaufwand besonders gering.

Die Ausführungsformen des Aufnahme-Wiedergabegeräts gemäß den Patentansprüchen 3 und 4 weisen den Vorteil auf, daß eine Bedienerführung ermöglicht wird. Durch die Anzeige des Entriegelungsvorgangs wird der Benutzer sofort darüber informiert, daß seine Befehlseingabe zum Ziel geführt hat und die Sonderfunktion beendet ist.

Ist gemäß Patentanspruch 5 das Bedienelement als Taste-/Anzeigeelement ausgebildet, so wird der Benutzer auf einfache Art und Weise darüber informiert, ob beim Betätigen des Bedienelements eine Betriebsfunktion oder eine Sonderfunktion ausgelöst wird.

Die Ausführungsformen des Aufnahme-Wiedergabegeräts gemäß den Patentansprüchen 6, 7 und 8 weisen den Vorteil auf, daß von der Steuereinrichtung oder dem Mikroprozessor Zählerstände einfach auszuwerten sind.

Die Ausführungsformen des Aufnahme-Wiedergabegeräts gemäß den Patentansprüchen 9 und 10 erfordern einen geringen zusätzlichen Schaltungsaufwand, wobei handelsübliche, preisgünstige Bauelemente benutzt werden können.

Die Erfindung wird im folgenden anhand einer in der Zeichnung dargestellten Ausführungsform näher beschrieben und erläutert.

Es zeigen:
- Fig. 1: das Blockschaltbild eines erfindungsgemäßen Aufnahme-Wiedergabegeräts, insbesondere Telefonanrufbeantworters und
- Fig. 2: eine Ausführungsform für eine Verriegelungsschaltung.

Das erfindungsgemäße Aufnahme-Wiedergabegerät wird im folgenden für den Anwendungsfall Telefonanrufbeantworter beschrieben. Daneben ist der Einsatz bei allen Aufnahme-Wiedergabegeäten möglich, bei welchen Betriebsfunktionen und Sonderfunktionen über ein und dieselben Bedienelemente vom Benutzer gesteuert werden und bei denen eine hohe Funktionssicherheit und ein hoher Bedienkomfort gefordert sind. Um diese Forderungen zu erfüllen, werden ohnehin im Gerät vorhandene Einrichtungen mitbenutzt, beispielsweise um bei einem Telefonanrufbeantworter einen Schutz gegen versehentliches Löschen der Texte (z.B. Mitteilungstexte und Ansage-Absagetexte) zu erhalten (Aufnahmesperre). Das Einschalten der Aufnahmesperre wird vorzugsweise durch eine im Gerät angeordnete Steuereinrichtung (z.B. Mikroprozessor) gesteuert und der Benutzer erhält bei der Betätigung des (oder der) Bedienelements einen entsprechenden Hinweis. Das Ausschalten der Aufnahmesperre kann auf überraschend einfache Art und Weise vom Benutzer gesteuert werden und der Bedienvorgang wird quittiert, wenn dieser zum Erfolg geführt hat.

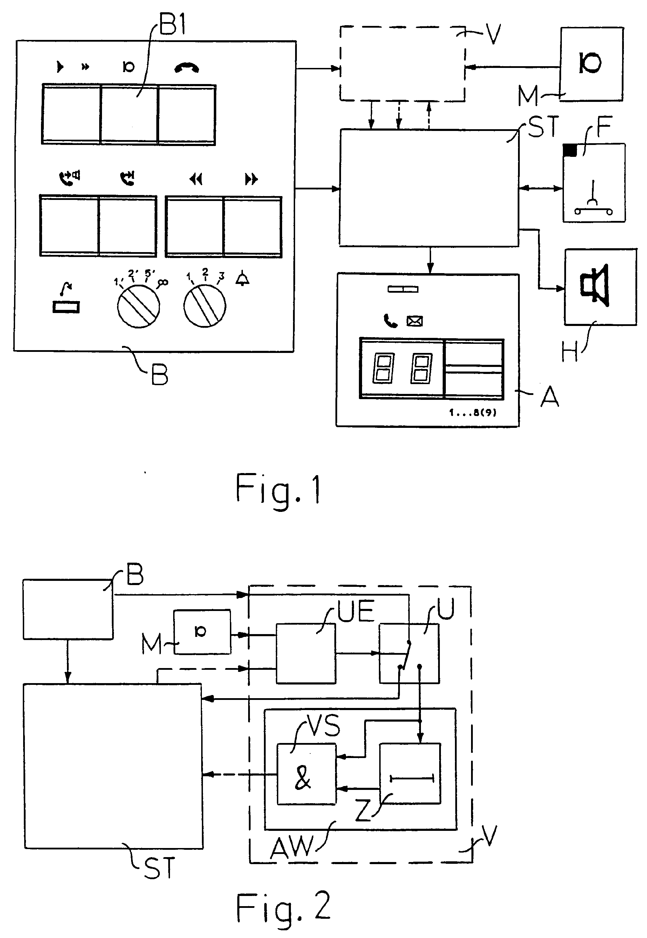

Fig. 1 zeigt das Blockschaltbild eines Telefonanrufbeantworters mit einer Bedieneinrichtung B und einer mit dieser verbundenen Steuereinrichtung ST zur Steuerung der im Gerät angeordneten Funktionseinrichtungen F, z.B. eines Magnetbandspeichers. Für die zu verriegelnden Bedienfunktionen führt eine zweite Verbindung über die Verriegelungsschaltung V zur Steuereinrichtung ST. Mit der Steuereinrichtung ST sind weiterhin eine Anzeigeeinrichtung A und eine akustische Wiedergabeeinrichtung H verbunden.

Telefon-Anrufbeantworter weisen verschiedene Betriebsarten z.B. "Nur -Anrufbeantwortung"; Anrufbeantwortung mit Aufzeichnung und Fernabfrage "; "Abhören aufgezeichneter Nachrichten" und "Diktierbetrieb" auf. Zur Steuerung der verschiedenen Betriebsfunktionen sind an der Bedieneinrichtung vom Benutzer die entsprechenden Bedienelemente zu betätigen. Bei Geräten moderner Bauart werden vorzugsweise als Bedienelemente Kurzhubtasten benutzt.

In der Praxis trat nun das Problem auf, daß beim Reinigen (Abstauben) des Telefonanrufbeantworters versehentlich die Neuaufnahme eines Mitteilungstextes oder Ansage-Absagetextes ausgelöst wurde, wodurch der entsprechende Text angelöscht und der Telefonanrufbeantworter funktionsunfähig wurde. Das Anlöschen des Textes ist darauf zurückzuführen, daß bei der Aufnahme des Mitteilungstextes oder Ansage- und Absagetextes am Ende des Textes eine Zwangslöschung bestimmter Zeitdauer vorgenommen wird, um diese Marke am Ende des Textes über einen Sprachschalter auswerten zu können. Beim Aufsprechen des jeweiligen Textes sind eine Reihe verschiedener Zeitbedingungen zu erfüllen, so daß im Hinblick auf einen hohen Bedienkomfort vorzugsweise eine Ein-Tastenbedienung für die jeweilige Betriebsfunktion vorgesehen ist und das Einhalten der Zeitbedingungen durch Bedienerführung an der Anzeigeeinrichtung A erleichtert wird.

In Fig. 1 sind die verschiedenen Bedienelemente mit ihren zugehörigen Symbolen dargestellt. Mittels der Aufnahmetaste B1 kann der Benutzer sowohl die jeweiligen Texte aufsprechen als auch den Telefonanrufbeantworter als Diktiergerät einsetzen.

Nach Aufzeichnung eines Mitteilungstextes oder Ansage-Absagetextes unter Einhaltung vorgegebener Grenzwerte für Pegel und Zeitverlauf wird die Neuaufnahme-Möglichkeit automatisch gesperrt, d.h. ein Tastenbefehl wird nicht angenommen und quittiert. Diese automatische Sperrung ist nicht wirksam, solange ein solcher Text nicht auf dem Band oder in einem digitalen Halbleiterspeicher abgelegt ist. Wird im gesperrten Zustand versehentlich ein Tastenbefehl zur Neuaufnahme erteilt, so wird über die Anzeigeeinrichtung A angezeigt, daß zunächst eine Entsperrung erfolgen muß.

Gemäß einer Ausführungsform muß die Aufnahmetaste B1 gedrückt und mehrere Sekunden lang gehalten werden. Die Entriegelung wird durch ein an der akustischen Wiedergabeeinrichtung H abgegebenes akustisches Signal bestätigt. Die weitere Tastenbetätigung zur Steuerung in den verschiedenen Betriebsarten und Betriebsfunktionen ist nun in der üblichen Weise möglich.

Da die Aufnahmetaste B1 jedoch auch zur Aufzeichnung einer Nachricht auf dem Band oder im digitalen Halbleiterspeicher benutzt wird bzw. für einen möglichen Diktierbetrieb verwendet wird, wobei die Entscheidung, ob der jeweilige Text oder ein Diktat aufgezeichnet werden soll, erst durch die nachfolgend betätigte Taste erfolgt, ist die Sperrung nur für die jeweilige Textaufnahme wirksam. Diktate können ohne Zeitverzögerung aufgezeichnet werden.

Wie bereits erläutert, dient die Anzeigeeinrichtung A zur Bedienerführung. Mit der Anzeigeeinrichtung A werden dem Benutzer verschiedene Informationen angezeigt, z.B. Textwahlanzeige, Anrufzählung, Nachrichtenzählung, Restspielzeit, Fehleranzeige, Codeanzeige, Anzeige bei Bandpositionierung, Zeitführung in Sekunden usw. Sind im Aufnahme-Wiedergabegerät bestimmte Sonderfunktionen ausgelöst, so können diese an der Anzeigeeinrichtung A angezeigt werden. Weiterhin kann der Benutzer zum Beenden der Sonderfunktion geführt werden. Beispielsweise kann durch die Anzeige "F9" der Benutzer darauf hingewiesen werden, daß die Textstelle schon besprochen und zur Neuaufnahme die Sonderfunktion "Aufnahmesperre" aufzuheben ist. Ist zum Entriegeln die Aufnahmetaste B1 eine bestimmte Zeitdauer lang gedrückt zu halten, so kann der Zeitablauf in der Anzeigeeinrichtung durch Zeitzählung angezeigt werden und/oder das Beenden der Sonderfunktion durch einen Signalton hörbar gemacht werden. In gleicher Weise kann vorgegangen werden, wenn zum Entriegeln ein oder mehrere Bedienelemente mehrmals und/oder in bestimmter Reihenfolge zu betätigen sind. Der Benutzer erhält dann einen Hinweis darauf, welches Bedienelement und wie oft dieses zu betätigen ist.

Die Steuerung der Betriebs- und Sonderfunktionen kann bei einer Ausführungsform auch von einem Mikroprozessor übernommen werden, welcher programmgesteuert das Bedienelement verriegelt und entriegelt bzw. die Sonderfunktion auslöst oder beendet.

In Fig. 2 ist eine Ausführungsform für eine Verriegelungsschaltung V dargestellt, bei der als Sonderfunktion bestimmte Bedienelemente verriegelbar und entriegelbar sind. Die Verriegelungschaltung V enthält einen Umschalter U, welcher einerseits mit der Bedieneinrichtung B verbunden ist und andererseits, gesteuert durch die Steuereinrichtung ST, zwischen dieser und einer mit der Steuereinrichtung ST verbundenen Auswerteeinrichtung AW umschaltet. Die Auswerteeinrichtung AW enthält ein Zeitglied Z und eine mit dessen Ausgang verbundene Verknüpfungsschaltung VS, vorzugsweise ein Und-Gatter. Der Eingang des Zeitglieds Z und ein weiterer Eingang des Und-Gatters VS ist mit dem Umschalter U verbunden, wobei der Ausgang der Verknüpfungsschaltung (VS) mit der Steuereinrichtung ST verbunden ist.

Während der Aufnahme wird von einer mit dem Mikrofon M verbundenen Überwachungseinrichtung UE, z.B. der Pegel und/oder der zeitliche Verlauf der am Mikrofon M, eingegebenen akustischen Signale überwacht. Sind die vorgegebenen Grenzwerte eingehalten, so wird, gesteuert durch die Steuereinrichtung ST, mit dem Umschalter U die Auswerteeinrichtung AW verbunden, wodurch das entsprechende Bedienelement, z.B. Aufnahmetaste B1, verriegelt ist. Zum Entriegeln muß nun der Benutzer die Aufnahmetaste B1 eine bestimmte Zeitdauer lang gedrückt halten, wobei diese Zeitdauer durch das Zeitglied Z bestimmt wird. Ist diese Zeitbedingung erfüllt, so steuert die Steuerschaltung ST um.

## Patentansprüche

1. Aufnahme-Wiedergabegerät, insbesondere Telefonanrufbeantworter, mit einer Bedieneinrichtung (B) und einer Steuereinrichtung (ST) zur Steuerung der im Gerät angeordneten Funktionseinrichtungen (F),
**dadurch gekennzeichnet,** daß mindestens einem Bedienelement (B1) eine Verriegelungsschaltung (V) zugeordnet ist, welche mit dem Bedienelement (B1) und der Steuereinrichtung (ST) verbunden ist, daß die Verriegelungsschaltung (V) mittels eines Steuerbefehls manuell und/oder automatisch von der Steuereinrichtung (ST) aktivierbar ist und daß zur Entriegelung des Bedienelements (B1) von der Verriegelungsschaltung (V) die Zeitdauer der Betätigung des Bedienelements (B1) ausgewertet wird.

2. Aufnahme-Wiedergabegerät nach Anspruch 1,
**dadurch gekennzeichnet,** daß als Steuereinrichtung (ST) und als Verriegelungsschaltung (V) ein Mikroprozessor benutzt wird, welcher programmgesteuert das Bedienelement (B1) verriegelt, indem während der Aufnahme sowohl der Pegel als auch der zeitliche Verlauf der eingegebenen Signale vom Mikroprozessor überwacht wird und bei Einhaltung vorgegebener Grenzwerte für Pegel und Zeitverlauf die Aufnahmefunktion automatisch verriegelt wird, und daß der Mikroprozessor zum Entriegeln die Zeitdauer der Betätigung des Bedienelements (B1) auswertet.

3. Aufnahme-Wiedergabegerät nach Anspruch 1 oder 2,
**dadurch gekennzeichnet,** daß mit der Steuereinrichtung (ST) oder dem Mikroprozessor eine Anzeigeeinrichtung (A) und/oder eine akustische Wiedergabeeinrichtung (H) verbunden ist, wodurch bei Betätigung des Bedienelements (B1) der Verriegelungszustand optisch und/oder akustisch anzeigbar ist.

4. Aufnahme-Wiedergabegerät nach Anspruch 3,
**dadurch gekennzeichnet,** daß der Entriegelungsvorgang optisch und/oder akustisch anzeigbar ist.

5. Aufnahme-Wiedergabegerät nach Anspruch 3 oder 4,
**dadurch gekennzeichnet,** daß das Bedienelement (B1) als Taste-/Anzeigeelement ausgebildet ist und der Verriegelungszustand und/oder Entriegelungszustand optisch anzeigbar ist.

6. Aufnahme-Wiedergabegerät nach Anspruch 1 oder 2,
**dadurch gekennzeichnet,** daß die Steuereinrichtung (ST) oder der Mikroprozessor zum Entriegeln die Anzahl der Betätigungen des Bedienelements (B1) auswertet.

7. Aufnahme-Wiedergabegerät nach Anspruch 1 oder 2,
**dadurch gekennzeichnet,** daß zur Steuerung in den Verriegelungszustand die Steuereinrichtung (ST) oder der Mikroprozessor die Reihenfolge der betätigten Bedienelemente auswertet.

8. Aufnahme-Wiedergabegerät nach Anspruch 7,
**dadurch gekennzeichnet,** daß die Steuereinrichtung (ST) oder der Mikroprozessor zum Entriegeln die Reihenfolge und/oder Anzahl der Betätigungen der Bedienelemente auswertet.

9. Aufnahme-Wiedergabegerät nach Anspruch 1,
**dadurch gekennzeichnet,** daß die Verriegelungsschaltung eine Überwachungseinrichtung (UE) und einen Umschalter (U) enthält, welcher mit der Bedieneinrichtung (B) verbunden ist und daß der Umschalter (U), gesteuert durch die Steuereinrichtung (ST), zwischen der Steuereinrichtung (ST) und einer mit der Steuereinrichtung (ST) verbundenen Auswerteeinrichtung (AW) umschaltet.

10. Aufnahme-Wiedergabegerät nach Anspruch 9,
**dadurch gekennzeichnet,** daß die Auswerteeinrichtung (AW) aus einem Zeitglied (Z) und einer mit dessen Ausgang verbundenen Verknüpfungsschaltung (VS) besteht, wobei der Eingang des Zeitglieds (Z) und ein weiterer Eingang der Verknüpfungsschaltung (VS) mit dem Umschalter (U) verbunden sind und daß der Ausgang der Verknüpfungsschaltung (VS) mit der Steuereinrichtung (ST) verbunden ist.

## Claims

1. Recording/playback device, in particular a telephone answering machine, having an operating device (B) and a control device (ST) for controlling the operating devices (F) disposed in the device,
**characterized in that**
associated with at least one operating element (B1) is an interlocking circuit (V) which is connected to the operating element (B1) and the control device (ST), that the interlocking circuit (V) may be activated manually and/or automatically by the control device (ST) by means of a control command and that, to cancel the interlock of the operating element (B1), the length of time for which the operating element (B1) is operated is evaluated by the interlocking circuit (V).

2. Recording/playback device according to claim 1,
**characterized in that**
as a control device (ST) and as an interlocking circuit (V), a microprocessor is used, which in a program-controlled manner interlocks the operating element (B1) in that, during recording, both the level and the time lapse of the input signals are monitored by the microprocessor and, given compliance with specific limit values for level and time lapse, the recording function is automatically interlocked, and that the microprocessor, for cancelling the interlock, evaluates the length of time for which the operating element (B1) is operated.

3. Recording/playback device according to claim 1 or 2,
**characterized in that**
connected to the control device (ST) or the microprocessor is a display device (A) and/or an audible playback device (H) so that, upon operation of the operating element (B1), the interlocked state may be visually and/or audibly indicated.

4. Recording/playback device according to claim 3,
**characterized in that**
the interlock-cancelling process may be visually and/or audibly indicated.

5. Recording/playback device according to claim 3 or 4,
**characterized** **in** **that**
the operating element (B1) takes the form of a key/display element and the interlocked state and/or interlock-cancelled state may be visually displayed.

6. Recording/playback device according to claim 1 or 2,
**characterized in that**
the control device (ST) or the microprocessor, for cancelling the interlock, evaluates the number of times that the operating element (B1) is operated.

7. Recording/playback device according to claim 1 or 2,
**characterized in that**
for control into the interlocked state, the control device (ST) or the microprocessor evaluates the sequence of the operated operating elements.

8. Recording/playback device according to claim 7,
**characterized in that**
for cancelling the interlock, the control device (ST) or the microprocessor evaluates the sequence and/or number of operations of the operating elements.

9. Recording/playback device according to claim 1,
**characterized in that**
the interlocking circuit (V) comprises a monitoring device (UE) and a changeover switch (U) which is connected to the operating device (B), and that the changeover switch (U), controlled by the control device (ST), switches between the control device (ST) and an evaluation device (AW) connected to the control device (ST).

10. Recording/playback device according to claim 9,
**characterized in that**
the evaluation device (AW) comprises a timing element (Z) having connected to its output a logic circuit (VS), the input of the timing element (Z) and a further input of the logic circuit (VS) being connected to the changeover switch (U), and that the output of the logic circuit (VS) is connected to the control device (ST).

## Revendications

1. Appareil d'enregistrement-reproduction, notamment répondeur téléphonique, comportant un dispositif de service (D) et un dispositif de commande (ST) pour commander les dispositifs fonctionnels (F) disposés dans l'appareil, caractérisé par le fait qu'à au moins un élément de service (B1) est associé un circuit de verrouillage (V), qui est relié à l'élément de service (B1) et au dispositif de commande (ST), que le circuit de verrouillage (V) peut être activé manuellement et/ou automatiquement au moyen d'une instruction de commande, par le dispositif de commande (ST) et que pour le déverrouillage de l'élément de service (B1) par le circuit de verrouillage (V), la durée de l'actionnement de l'élément de service (B1) est évaluée.

2. Appareil d'enregistrement-reproduction selon la revendication 1, caractérisé en ce qu'on utilise comme dispositif de commande (ST) et comme circuit de verrouillage (V) un microprocesseur, qui verrouille l'élément de service (B1) d'une manière commandée par un programme, par le fait que pendant l'enregistrement, aussi bien le niveau que la variation dans le temps des signaux introduits sont contrôlés par le microprocesseur et que, lors du respect de valeurs limites prédéterminées pour le niveau et la variation dans le temps, la fonction d'enregistrement est verrouillée automatiquement et que pour le déverrouillage, le microprocesseur évalue la durée de l'actionnement de l'élément de service (B1).

3. Appareil d'enregistrement-reproduction selon la revendication 1 ou 2, caractérisé par le fait qu'au dispositif de commande (ST) ou au microprocesseur est relié un dispositif d'affichage (A) et/ou un dispositif de reproduction acoustique (H), ce qui a pour effet que lors de l'actionnement de l'élément de service (B1), l'état de verrouillage peut être indiqué optiquement et/ou acoustiquement.

4. Appareil d'enregistrement-reproduction selon la revendication 3, caractérisé en ce que l'opération de déverrouillage peut être indiquée optiquement et/ou acoustiquement.

5. Appareil d'enregistrement-reproduction selon la revendication 3 ou 4, caractérisé en ce que l'élément de service (B1) est réalisé sous la forme d'un élément de manipulation/affichage et que l'état de verrouillage et/ou l'état de déverrouillage peut être affiché optiquement.

6. Appareil d'enregistrement-reproduction selon la revendication 1 ou 2, caractérisé en ce que le dispositif de commande (ST) et le microprocesseur évaluent, pour le déverrouillage, le nombre des actionnements de l'élément de service (B1).

7. Appareil d'enregistrement-reproduction selon la revendication 1 ou 2, caractérisé en ce que pour la commande dans l'état de verrouillage, le dispositif de commande (ST) et le microprocesseur évaluent la succession des éléments de service actionnés.

8. Appareil d'enregistrement-reproduction selon la revendication 7, caractérisé en ce que le dispositif de commande (ST) du microprocesseur évalue, pour le déverrouillage, la succession et/ou le nombre des actionnements des éléments de service.

9. Appareil d'enregistrement-reproduction selon la revendication 1, caractérisé en ce que le circuit de verrouillage (B1) contient un dispositif de contrôle (UE) et un commutateur (U), qui est relié au dispositif de service (B) et que, sous la commande du dispositif de commande (ST), le commutateur (U) est commuté entre le dispositif de commande (ST) et un dispositif d'évaluation (AW) relié au dispositif de commande (ST).

10. Appareil d'enregistrement-reproduction selon la revendication 9, caractérisé en ce que le dispositif d'évaluation (AW) est constitué par une minuterie (Z) et par un circuit combinatoire (VS) relié à la sortie de cette minuterie, l'entrée de la minuterie (Z) et une autre entrée du circuit combinatoire (VS) étant reliées au commutateur (U), et que la sortie du circuit combinatoire (VS) est reliée au dispositif de commande (ST).
